# EUROPEAN PATENT APPLICATION

(11) **EP 4 572 522 A1**
(43) Date of publication of application: **18.06.2025**
(21) Application number: 23851721.3
(22) Date of filing: 04.08.2023
(51) Int. Cl.: H04W 76/27

(54) **METHOD EXECUTED BY UE, AND UE**

(30) Priority: 08.08.2022 CN 202210946585
(71) Applicant: Sharp Kabushiki Kaisha, Sakai City, Osaka 590-8522 (JP)
(72) Inventor: LIU, Renmao, Shanghai 201206 (CN); XIAO, Fangying, Shanghai 201206 (CN)
(74) Representative: Müller Hoffmann & Partner
(86) International application number: PCT/CN2023/111227
(87) International publication number: WO 2024/032500

(57) **Abstract**

The present invention provides a method performed by user equipment, and user equipment. The method performed by user equipment (UE) includes: receiving a radio resource control (RRC) message from a base station; and in the case that the received RRC message includes an indication used for indicating a multicast/broadcast service (MBS) session to be received by UE after entering an RRC inactive state, performing, by the UE, an operation related to reception of the MBS session indicated by the indication. In this way, user equipment in the RRC inactive state can receive a multicast service, thereby conserving communication resources and improving communication efficiency.

## Description

### TECHNICAL FIELD

The present invention relates to the technical field of wireless communications. More specifically, the present invention relates to a method performed by user equipment, and user equipment.

### BACKGROUND ART

A study item (SI) on architectural enhancements for 5G multicast-broadcast services (see SP-190625 for details) has been approved. One objective (referred to as Objective A) of this SI is to support general-purpose MBS services in 5GS, and use cases that can benefit from these characteristics include (but are not limited to) public safety, V2X applications, transparent IPv4/IPv6 multicast delivery, IPTV, wireless software delivery, group communications, Internet of Things applications, etc. Correspondingly, at the 3rd Generation Partnership Project (3GPP) RAN#86 plenary meeting, an NR multicast and broadcast service (NR MBS) work item was proposed (see Non-Patent Document: RP-193248: New WID: NR Multicast and Broadcast Service), and was approved. This work item aims to provide the support in the RAN for Objective A. The objective of the work item has been achieved. For a detailed description of the related schemes, reference may be made to related technical documents of 3GPP Release 17, such as TS38.300-h10, TS38.331-h10, TS38.321-h10, etc. At the 3GPP RAN#94 plenary meeting, a work item named enhanced NR broadcast/multicast (see Non-Patent Document: RP-213568: New WID: Enhancements of NR Multicast and Broadcast Services) was approved, aiming to further enhance the MBS broadcast/multicast of Release 17. One of the objectives of the work item is to enable user equipment in the RRC inactive state to receive a multicast service.

The present invention discusses related issues involved in enabling user equipment in the RRC inactive state to receive a multicast service in the RAN.

### SUMMARY OF THE INVENTION

An object of the present invention is to provide a method performed by user equipment and capable of enabling user equipment in an RRC inactive state to receive a multicast service, and user equipment.

According to an aspect of the present invention, provided is a method performed by user equipment (UE), comprising: receiving a radio resource control (RRC) message from a base station; and in the case that the received RRC message includes an indication used for indicating a multicast/broadcast service (MBS) session to be received by UE after entering an RRC inactive state, performing, by the UE, an operation related to reception of the MBS session indicated by the indication.

According to another aspect of the present invention, provided is user equipment, comprising: a processor; and a memory storing instructions, wherein the instructions, when run by the processor, perform the above method.

### Effect of Invention

The method performed by user equipment and the user equipment of the present invention enable user equipment in the RRC inactive state to receive a multicast service, thereby conserving communication resources and improving communication efficiency.

### BRIEF DESCRIPTION OF THE DRAWINGS

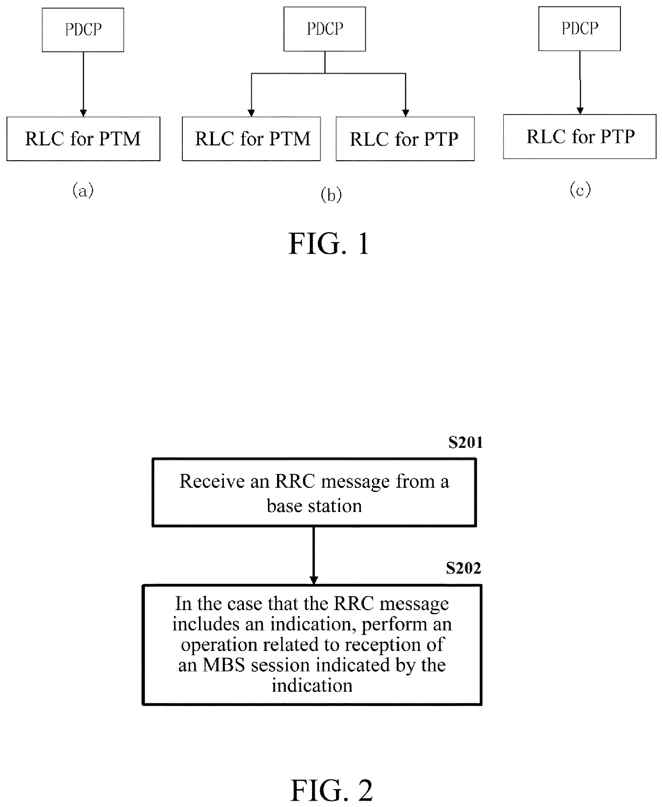

The above and other features of the present invention will be more apparent from the following detailed description in combination with the accompanying drawings, in which:
(a) to (c) of FIG. 1 are schematic diagrams showing specific configurations of a radio bearer for receiving an MBS service according to the present invention.
FIG. 2 shows a flowchart of a method applied to user equipment (UE) according to an embodiment of the present invention.
FIG. 3 shows a block diagram of user equipment (UE) according to an embodiment of the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP related documents, for example TS38.300, TS38.321, TS38.323, TS38.331, etc. In addition, embodiments of the present invention are not limited to broadcast/multicast services, and may also be applied to other application scenarios.
UE: User Equipment.
RRC: Radio Resource Control.
RRC_CONNECTED: RRC connected state.
RRC_INACTIVE: RRC inactive state.
RRC_IDLE: RRC idle state.
RAN: Radio Access Network.
NR: New RAT, New Radio Access Technology.
MBS: Multicast/Broadcast Services.
PDCP: Packet Data Convergence Protocol.
RLC: Radio Link Control.
SDU: Service Data Unit. A data packet received by the present layer from an upper layer or submitted by the present layer to an upper layer is referred to as an SDU.
PDU: Protocol Data Unit. A data packet received by the present layer from a lower layer or submitted by the present layer to a lower layer is referred to as a PDU. For example, a PDCP data PDU is a data packet obtained after a PDCP header is added to a PDCP SDU.
RB: Radio Bearer.
MRB: an MBS radio bearer, i.e., a radio bearer that is configured for MBS delivery.
TMGI: Temporary Mobile Group Identity for identifying an MBS session.
RNTI: Radio Network Temporary Identifier.
PTM: Point to Multipoint, an MBS service delivery means. In a PTM delivery means, a base station (gNB) delivers a single copy of MBS data packets to a set of UEs. For example, the base station uses a group common physical downlink control channel (PDCCH) scrambled by a G-RNTI to schedule a group common physical downlink shared channel (PDSCH) scrambled by the same G-RNTI.
PTP: Point to Point, an MBS service delivery means. In a PTP delivery means, a RAN node (gNB) individually delivers separate copies of MBS data packets to individual UEs independently. That is, the base station uses a UE-specific PDCCH scrambled by a UE-specific RNTI to schedule a UE-specific PDSCH scrambled by the same UE-specific RNTI.
G-RNTI: Group RNTI, used to scramble the scheduling and transmission of PTM for one or more MBS multicast services.
G-CS-RNTI: Group Configured Scheduling RNTI.

In the present invention, a network, a base station, and a RAN may be used interchangeably. The network may be a Long Term Evolution (LTE) network, an NR network, an enhanced Long Term Evolution (eLTE) network, or another network defined in a subsequent evolved version of the 3GPP.

Currently, NR MBS services include MBS broadcast (or an MBS broadcast session) and MBS multicast (or an MBS multicast session). The MBS broadcast provides a downlink-only MBS transmission mode for a service with low quality of service (QoS), so that UE in an RRC connected state, an RRC idle state, or an RRC inactive state can receive the MBS service, and the UE receives an MBS configuration of the MBS broadcast via a broadcast control channel MCCH. MBS multicast requires that UE establishes an RRC connection to a base station, and then the base station performs configuration for the UE via dedicated RRC signaling (also referred to as an RRC message). Radio bearers (MRBs) for receiving these MBS services (or MBS multicast sessions) may also be configured for the UE by the base station via dedicated RRC signaling. Only UE that is in the RRC connected state and is configured with the MRB can receive a corresponding MBS service.

MBS sessions include an MBS broadcast session and an MBS multicast session. Unless otherwise specified, the MBS session is an MBS multicast session in the embodiments of the present disclosure.

(a) to (c) of FIG. 1 are schematic diagrams showing specific configurations of a radio bearer for receiving MBS multicast. The radio bearer may be an MRB configured for PTM transmission only (as shown in (a) of FIG. 1), or a split MRB configured for both PTM and PTP (as shown in (b) of FIG. 1), or an MRB configured for PTP transmission only (as shown in (c) of FIG. 1). It should be noted that (a) to (c) of FIG. 1 show only a PDCP entity and an RLC entity corresponding to a bearer and a relationship therebetween. In the downlink direction, a PDCP PDU encapsulated by a PDCP entity is submitted to an RLC entity.

In order to enable UE in the RRC inactive state to receive an MBS multicast service in a PTM manner like UE in the RRC connected state, how to configure a corresponding MRB or PTM for UE in the inactive state is a problem to be solved.

An RRC reconfiguration message is a command used to modify an RRC connection, and an RRC release message is used to command release of an RRC connection or suspension of an RRC connection, both of which are transmitted by a base station to UE. If the RRC release message includes a field suspendConfig that indicates the configuration of the RRC inactive state, the UE suspends the RRC connection according to the configuration in the field, or otherwise the UE releases the RRC connection. The embodiments of the present disclosure discuss how to configure PTM or an MRB for UE in the RRC inactive state, therefore, the following embodiments all consider the case where the RRC release message includes the suspendConfig field. Further, unless otherwise specified, any indication used for indicating an MBS session to be received after UE enters the RRC inactive state can be included in the suspendConfig field.

In view of the above problems, the present disclosure provides the following embodiments.

FIG. 2 shows a flowchart of a method applied to user equipment (UE) according to an embodiment of the present invention.

In step S201, user equipment (UE) receives an RRC message from a base station, and the RRC message includes an indication used to indicate the MBS session(s) to be received after the UE enters an RRC inactive state.

In step S202, on the basis of the received RRC message, the user equipment (UE) performs an operation related to reception of the MBS session indicated by the indication, for example, performs at least one of operations A to C:
A. If the RRC message includes the indication, performing partial MAC reset; or if the RRC message does not include the indication, performing MAC reset and/or releasing a default MAC cell group configuration (this operation is performed only when the default MAC cell group configuration is present).
B. Suspending all SRB(s) and DRB(s) and multicast MRB(s) except SRBO and the multicast MRB(s) determined, according to the indication, to be received in the RRC inactive state.
C. Indicating, to a lower layer (e.g., a PDCP layer), PDCP suspension of all the DRBs and the multicast MRBs except the multicast MRB determined, according to the indication, to be received in the inactive state. Upon receiving a PDCP suspension request from an upper layer (e.g., an RRC layer), a transmitting PDCP entity may set a state variable TX_NEXT used for indicating the COUNT value of a next PDCP SDU to be transmitted to an initial value and/or discard all stored PDCP PDUs. Upon receiving a PDCP suspension request from an upper layer (e.g., the RRC layer), a receiving PDCP entity may determine whether a duration timer t-Reordering configured by the upper layer to control a waiting PDCP SDU is running, and if the timer is running, the receiving PDCP entity stops and resets the timer and/or sequentially delivers all stored PDCP SDUs to the upper layer in ascending order of the COUNT values after performing header decompression thereon. The receiving PDCP entity may further set the value of a state variable RX_NEXT used for indicating the COUNT value of a next PDCP SDU expected to be received and the value of a state variable RX_DELIV used for indicating the COUNT value of the first PDCP SDU having not yet been delivered to the upper layer (e.g., a service data adaptation protocol (SDAP) entity) to initial values. COUNT consists of a hyper frame number (HFN) and a PDCP serial number (SN).

Optionally, the UE (or the RRC layer) indicates, to an upper layer (e.g., a NAS layer), a TMGI corresponding to the MBS session indicated by the indication or a TMGI corresponding to the MRB indicated by the indication or a TMGI indicated by the indication.

Optionally, the UE (or the RRC layer) indicates, to a lower layer (e.g., a medium access control (MAC) layer), a G-RNTI or a G-CS-RNTI or an MRB identifier or a TMGI corresponding to the MBS session or the MRB to be received in the RRC inactive state. When the MAC layer receives the indication or is configured with the MBS session or the MRB to be received in the inactive state, the MAC layer may monitor the G-RNTI corresponding to the MBS session configured to be received in the inactive state.

Optionally, for the MBS session or the MRB configured to be received in the RRC inactive state, if the corresponding MBS session or G-RNTI or G-CS-RNTI or TMGI is configured to require HARQ feedback, upon receiving an RRC release message indicating to enter the RRC inactive state, the UE (or the RRC layer) considers or indicates, to the lower layer (e.g., the MAC layer), that the HARQ feedback is not enabled or is not required or is disabled. Upon receiving the indication or when the UE is in the inactive state, the MAC layer does not perform HARQ feedback (or does not instruct the physical layer to generate an acknowledgment for a received TB) for the MBS session (or the MRB) configured to be received in the inactive state. In other words, for the MBS session configured to require HARQ feedback, the HARQ feedback is performed only when the UE is in the RRC connected state (or the UE is not in the RRC inactive state).

In the present disclosure, the MAC reset (or a MAC reset operation performed by a MAC entity when the UE is not configured with an MBS session receivable in the RRC inactive state) may include at least one of the following operations:
1. Stopping all timers except an MBS broadcast discontinuous reception (DRX) timer.
2. Setting the value of a new data indicator (NDI) of all uplink HARQ processes to 0.
3. Stopping an ongoing random access procedure.
4. Flushing soft buffers of all downlink processes except those used for MBS broadcast and downlink HARQ processes.
5. For each downlink HARQ process, considering that a next transport block to be received is transmitted for the first time.

In the present disclosure, the partial MAC reset (or a MAC reset or partial MAC reset operation performed by a MAC entity when the UE is configured with an MBS session receivable in the RRC inactive state) may include at least one of the following operations:
1. Stopping all timers except the MBS broadcast discontinuous reception (DRX) timer and a DRX timer corresponding to the MBS session configured to be receivable in the RRC inactive state.
2. Flushing soft buffers of all downlink processes except the downlink HARQ process used for the MBS broadcast and the downlink HARQ process used for the MBS session receivable in the RRC inactive state.
3. Setting the value of the new data indicator (NDI) of all uplink HARQ processes to 0. Alternatively, the value of the new data indicator (NDI) of all uplink HARQ processes except the uplink HARQ process corresponding to the MBS session configured to be receivable in the RRC inactive state is set to 0.
4. For each downlink HARQ process except the downlink HARQ process corresponding to the MBS session configured to be receivable in the RRC inactive state, considering that a next transport block to be received is transmitted for the first time.
5. Flushing all uplink HARQ buffers.
6. Stopping an ongoing random access procedure.
7. Flushing the buffer of Msg3

It should be noted that if the UE performs more than one of A to C, embodiments achieved by changing the execution order also fall within the scope of protection of the present disclosure. The entity that performs step S201 and step S202 may be an RRC entity of the UE.

The above method enables user equipment in the RRC inactive state to receive a multicast service, thereby conserving communication resources and improving communication efficiency.

MBS multicast supports two hybrid automatic repeat request (HARQ) feedback modes. One of the HARQ feedback modes is ACK-NACK feedback. That is, HARQ-ACK information is transmitted on a physical uplink control channel (PUCCH) when UE correctly receives a transport block, and HARQ-NACK information is transmitted on a PUCCH when UE does not correctly receive a transport block. The other HARQ feedback mode is NACK-only feedback (nack-only). That is, HARQ-NACK information is transmitted on a PUCCH only when UE does not correctly receive a transport block. The base station configures, via an RRC reconfiguration message, whether HARQ feedback is required for each MBS session or G-RNTI or G-CS-RNTI, and the configuration may be performed via a field harq-FeedbackEnablerMulticast associated with each G-RNTI. The field harq-FeedbackEnablerMulticast is used to indicate whether the UE should provide HARQ feedback for the MBS multicast (or a received transport block scrambled by the G-RNTI). Further, the feedback mode may also be configured for the UE as NACK-only feedback or ACK-NACK feedback, and the configuration is performed via a harq-FeedbackOptionMulticast field. The harq-FeedbackOptionMulticast field indicates a feedback mode of a dynamically scheduled physical downlink shared channel (PDSCH) or semi-persistently scheduled (SPS) PDSCH MBS multicast.

The MRB or MBS session or TMGI or G-RNTI or G-CS-RNTI indicated by the indication may be defined as an MRB or MBS session or TMGI or G-RNTI or G-CS-RNTI for which no HARQ feedback is configured, that is, an MRB or MBS session or TMGI or G-RNTI or G-CS-RNTI for which the field harq-FeedbackEnablerMulticast is not configured.

It may be further defined that, if the indication indicates that the MRB or MBS session or TMGI or G-RNTI or G-CS-RNTI to be received in the inactive state is an MRB or MBS session or TMGI or G-RNTI or G-CS-RNTI for which HARQ feedback is configured, after the UE enters the RRC inactive state, HARQ feedback is not provided for the corresponding MRB or MBS or it is indicated that no HARQ feedback is required.

The RRC message carrying the indication and the indication mode of the indication will be described in detail below via different embodiments.

### Embodiment 1

A base station sends an RRC reconfiguration message RRCReconfiguration to UE to configure, for the UE in the RRC connected state, an MRB used for transmitting an MBS session, and includes, in an RRC release message RRCRelease sent to the UE, an indication used for indicating the MBS session to be received after the UE enters the RRC inactive state.

The indication field may be implemented in the following modes:
Mode 1: The indication field includes an MRB identifier list (denoted as a ptmReceptionInInactiveList field). If an MRB identifier corresponding to an MBS session is included in the indication, it is indicated that the UE needs to receive the MBS session or an MRB corresponding to the MRB identifier after entering the RRC inactive state.

Specifically, when the received RRC release message includes suspendConfig, if the RRC release message further includes the indication, the UE performs at least one of the following operations:
A. Performing partial MAC reset.
B. Suspending all SRB(s) and DRB(s) and multicast MRB(s) except SRBO and the multicast MRB(s) indicated by the indication.
C. Indicating, to a lower layer, PDCP suspension of all the DRBs and the multicast MRBs except the multicast MRB indicated by the indication.

It should be noted that if the UE performs more than one of A to C, embodiments achieved by changing the execution order also fall within the scope of protection of the present disclosure.

If the RRC release message does not include the indication, MAC reset is performed and/or a default MAC cell group configuration is released (this operation is performed only when the default MAC cell group configuration is present).

In other words, when the RRC release message includes the indication, the MRB indicated by the indication is not suspended (or other RBs except SRBO and/or the MRB indicated by the indication are suspended), that is, the indication field indicates the MRB not to be suspended.

### [Variation of Mode 1]

The indication includes an MRB identifier list. If an MRB identifier corresponding to an MBS session is not included in the indication, it is indicated that the UE needs to receive the MBS session or an MRB corresponding to the MRB identifier after entering the RRC inactive state. In other words, upon receiving the indication to enter the RRC inactive state, the UE suspends the MRB included in the indication or suspends other RBs except SRBO and/or an MRB not indicated by the indication field). That is, the indication indicates the MRB to be suspended.

Mode 2: The indication includes a TMGI list. If a TMGI corresponding to an MBS session is included in the indication, it is indicated that the UE needs to receive the MBS session or an MRB corresponding to the TMGI after entering the RRC inactive state.

In other words, upon receiving the indication to enter the RRC inactive state, the UE does not suspend the MRB corresponding to the TMGI included in the indication (or suspends other RBs except SRBO and/or that not indicated by the indication). That is, the indication indicates the TMGI corresponding to the MRB not to be suspended.

Specifically, when the received RRC release message includes suspendConfig, if the RRC release message further includes the indication, the UE performs at least one of the following operations:
A. Performing partial MAC reset.
B. Suspending all SRB(s) and DRB(s) and multicast MRB(s) except SRBO and the multicast MRB(s) corresponding to the TMGI indicated by the indication.
C. Indicating, to a lower layer, PDCP suspension of all the DRBs and the multicast MRBs except the multicast MRB corresponding to the TMGI indicated by the indication.

It should be noted that if the UE performs more than one of A to C, embodiments achieved by changing the execution order also fall within the scope of protection of the present disclosure.

If the RRC release message does not include the indication, MAC reset is performed and/or a default MAC cell group configuration is released (this operation is performed only when the default MAC cell group configuration is present).

### [Variation of Mode 2]

The indication includes a TMGI list. If a TMGI corresponding to an MBS session is not included in the indication, it is indicated that the UE needs to receive the MBS session or an MRB corresponding to the TMGI after entering the RRC inactive state. In other words, upon receiving the indication to enter the RRC inactive state, the UE suspends the MRB corresponding to the TMGI included in the indication or suspends other RBs except SRBO and/or an MRB corresponding to a TMGI not indicated by the indication). That is, the indication indicates the TMGI corresponding to the MRB to be suspended.

Mode 3: The indication includes a G-RNTI or G-CS-RNTI list. If a G-RNTI or G-CS-RNTI corresponding to an MBS session is included in the indication, it is indicated that the UE needs to receive the MBS session or an MRB corresponding to the G-RNTI or G-CS-RNTI after entering the RRC inactive state. The G-CS-RNTI is used to scramble a semi-persistently scheduled (SPS) group common PDSCH of one or more MBS multicast services and activate/deactivate the SPS group common PDSCH.

In other words, upon receiving the indication to enter the RRC inactive state, the UE does not suspend the MRB corresponding to the G-RNTI or G-CS-RNTI included in the indication (or suspends other RBs except SRBO and/or that not indicated by the indication). That is, the indication indicates the G-RNTI or G-CS-RNTI corresponding to the MRB not to be suspended.

Specifically, when the received RRC release message includes suspendConfig, if the RRC release message further includes the indication, the UE performs at least one of the following operations:
A. Performing partial MAC reset.
B. Suspending all SRB(s) and DRB(s) and multicast MRB(s) except SRBO and the multicast MRB(s) corresponding to the G-RNTI or G-CS-RNTI indicated by the indication.
C. Indicating, to a lower layer, PDCP suspension of all the DRBs and the multicast MRBs except the multicast MRB corresponding to the G-RNTI or G-CS-RNTI indicated by the indication.

It should be noted that if the UE performs more than one of A to C, embodiments achieved by changing the execution order also fall within the scope of protection of the present disclosure.

If the RRC release message does not include the indication, MAC reset is performed and/or a default MAC cell group configuration is released (this operation is performed only when the default MAC cell group configuration is present).

### [Variation of Mode 3]

The indication includes a G-RNTI or G-CS-RNTI list. If a G-RNTI or G-CS-RNTI corresponding to an MBS session is not included in the indication, it is indicated that the UE needs to receive the MBS session or an MRB corresponding to the G-RNTI or G-CS-RNTI after entering the RRC inactive state. In other words, upon receiving the indication to enter the RRC inactive state, the UE suspends the MRB corresponding to the G-RNTI or G-CS-RNTI included in the indication or suspends other RBs except SRBO and/or an MRB corresponding to a G-RNTI or G-CS-RNTI not indicated by the indication). That is, the indication indicates the G-RNTI or G-CS-RNTI corresponding to the MRB to be suspended.

Mode 4: The indication includes a bitmap, and each bit in the bitmap corresponds to one MRB (or each bit in the bitmap corresponds to one MBS session or MRB that is not configured to require HARQ feedback). For example, MRB identifiers sequentially correspond to the bits in the bitmap in ascending order. When the value of a corresponding bit in the bitmap is 1, it is indicated that the UE needs to receive the MBS session corresponding to the MRB identifier or the MRB corresponding to the MRB identifier after entering the RRC inactive state. When the value of a corresponding bit in the bitmap is 0, it is indicated that the UE does not receive the MBS session corresponding to the MRB identifier or the MRB corresponding to the MRB identifier after entering the RRC inactive state. In other words, upon receiving the indication to enter the RRC inactive state, the UE does not suspend the MRB corresponding to the bit in the bitmap of which the value is 1 (or suspends other RBs except SRBO and/or the MRB corresponding to the bit in the bitmap of which the value is 1). That is, the corresponding bit having the value of 1 in the bitmap indicates the MRB not to be suspended, and the corresponding bit having the value of 0 indicates the MRB to be suspended.

Specifically, when the received RRC release message includes suspendConfig, if the RRC release message further includes the bitmap, the UE performs at least one of the following operations:
A. Performing partial MAC reset.
B. Suspending all SRB(s) and DRB(s) and multicast MRB(s) except SRBO and the multicast MRB(s) corresponding to a bit having the value of 1 in the bitmap.
C. Indicating, to a lower layer, PDCP suspension of all the DRBs and the multicast MRBs except the multicast MRB corresponding to the bit having the value of 1 in the bitmap.

Compared with mode 1, mode 2, and mode 3, the bitmap mode can reduce signaling overhead.

### [Variation of Mode 4]

The indication includes a bitmap, and each bit in the bitmap corresponds to one MRB (or each bit in the bitmap corresponds to one MBS session or MRB that is not configured to require HARQ feedback). For example, MRB identifiers sequentially correspond to the bits in the bitmap in ascending order. When the value of a corresponding bit in the bitmap is 1, it is indicated that the UE does not need to receive the MBS session or the MRB corresponding to the MRB identifier after entering the RRC inactive state. In other words, upon receiving the indication to enter the RRC inactive state, the UE suspends the MRB corresponding to the bit of 1 in the bitmap. That is, the indication indicates the MRB to be suspended.

Mode 5: The indication is used to indicate that the UE, after entering the RRC inactive state, still receives an MBS session or an MRB not configured to require HARQ feedback. In other words, when a received RRC message includes the indication, the UE does not suspend the MRB corresponding to the MBS session that is not configured to require HARQ feedback or the UE does not suspend the MRB that is not configured to require HARQ feedback. That is, when the received RRC message includes the indication, the UE suspends the MRB corresponding to the MBS session that is configured to require HARQ feedback or the UE suspends the MRB that is configured to require HARQ feedback.

Specifically, when the received RRC release message includes suspendConfig, if the RRC release message further includes the indication used for indicating that the UE in the inactive state receives the MRB or the MBS session that is configured to require no HARQ feedback, at least one of the following operations A to C is performed:
A. Performing partial MAC reset.
B. Suspending all SRB(s) and DRB(s) and multicast MRB(s) except SRBO and the MRB(s) corresponding to the MBS multicast not configured to require HARQ feedback.
C. Indicating, to a lower layer, PDCP suspension of all the DRBs and the multicast MRBs except the multicast MRB corresponding to the MBS multicast not configured to require HARQ feedback.

If the RRC release message does not include the indication, MAC reset is performed and/or a default MAC cell group configuration is released (this operation is performed only when the default MAC cell group configuration is present).

### Embodiment 2

A base station uses an RRC reconfiguration message to configure, for UE in the RRC connected state, an MRB used for transmitting an MBS session, and includes, in a corresponding configuration field of the MRB, an indication used for indicating whether the UE receives the MRB after entering the RRC inactive state.

When the received RRC release message includes suspendConfig, if at least one MRB is configured with the indication, the UE performs at least one of the following operations:
A. Performing partial MAC reset.
B. Suspending all SRB(s) and DRB(s) and multicast MRB(s) except SRBO and the multicast MRB(s) configured with the indication.
C. Indicating, to a lower layer, PDCP suspension of all the DRBs and the multicast MRBs except the multicast MRB configured with the indication.

It should be noted that if the UE performs more than one of A to C, embodiments achieved by changing the execution order also fall within the scope of protection of the present disclosure.

If none of the MRBs is configured with the indication, MAC reset is performed and/or a default MAC cell group configuration is released (this operation is performed only when the default MAC cell group configuration is present).

### [Variation of Embodiment 2]

The base station uses the RRC reconfiguration message to carry an indication used for indicating a G-RNTI or G-CS-RNTI or TMGI corresponding to an MBS session or an MRB to be received by the UE in the RRC inactive state. Correspondingly, the MRB received in the RRC inactive state described in Embodiment 2 is the MRB corresponding to the G-RNTI or G-CS-RNTI or TMGI corresponding to the MBS session or the MRB indicated by the indication.

### Embodiment 3

A base station performs configuration for UE via an RRCRelease message, and indicates an MRB used for transmitting an MBS session for the UE in the RRC connected state.

In order to receive MBS multicast (for example, a paging message is received, and includes TMGIs corresponding to one or more MBS sessions that the UE has joined), the UE in the RRC inactive state sends, to a base station, an RRC resume request message RRCResumeRequest used for requesting resumption of a suspended RRC connection or used for performing a RAN-based notification area (RNA) update. The message includes a cause field ResumeCause having a value corresponding to TMGIs of one or more MBS sessions that the UE wants to receive or used to indicate that the UE needs to receive the MBS session and therefore triggers transmission of an RRC connection resumption request.

The UE receives, from the base station, an RRC release message including the suspendConfig field, and the message includes configuration information indicating an MRB of an MBS session to be received by the UE in the inactive state. The UE configures the corresponding MRB according to the configuration information and receives the corresponding MBS session.

For an MRB configured for both PTM and PTP transmission, it may be specified that the PTP transmission is suspended when the UE is in the RRC inactive state. That is, the UE receives the MBS session only from the PTM.

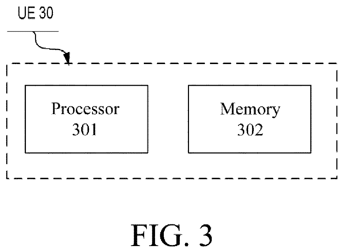

FIG. 3 shows a block diagram of user equipment (UE) 30 according to an embodiment of the present invention. As shown in FIG. 3, the UE 30 includes a processor 301 and a memory 302. The processor 301 may include, for example, a microprocessor, a microcontroller, an embedded processor, and the like. The memory 302 may include, for example, a volatile memory (for example, a random access memory (RAM)), a hard disk drive (HDD), a non-volatile memory (for example, a flash memory), or other memory systems. The memory 302 has program instructions stored thereon. The instructions, when run by the processor 301, can perform the aforementioned method applied to the user equipment described in detail in the present invention.

Additionally, the computer-executable instructions or program running on the device according to the present invention may be a program that enables the computer to implement the functions of the embodiments of the present invention by controlling the central processing unit (CPU). The program or information processed by the program may be temporarily stored in a volatile memory (for example, a random access memory (RAM)), a hard disk drive (HDD), a non-volatile memory (for example, a flash memory), or other memory systems.

The computer-executable instructions or program for implementing the functions of the embodiments of the present invention may be recorded on a computer-readable storage medium. The corresponding functions may be achieved by reading programs recorded on the recording medium and executing the programs by a computer system. The so-called "computer system" may be a computer system embedded in the device, which may include operating systems or hardware (for example, peripherals). The "computer-readable storage medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed via circuits (for example, monolithic or multi-chip integrated circuits). Circuits designed to execute the functions described in the present specification may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment (UE), comprising:
receiving a radio resource control (RRC) message from a base station; and
in the case that the received RRC message comprises an indication used for indicating a multicast/broadcast service (MBS) session to be received after UE enters an RRC inactive state, performing, by the UE, an operation related to reception of the MBS session indicated by the indication.

2. The method according to claim 1, wherein
an RRC release message is received from the base station, and the RRC release message comprises the indication.

3. The method according to claim 2, wherein
the indication comprises an MRB identifier list, and
the UE performs at least one of the following operations:
performing a medium access control (MAC) partial resetting;
suspending all signaling radio bearers (SRBs), data radio bearers (DRBs), and multicast MRBs except SRBO and a multicast MRB indicated by the indication; and
indicating, to a lower layer, packet data convergence protocol (PDCP) suspension of all the DRBs and the multicast MRBs except the multicast MRB indicated by the indication.

4. The method according to claim 2, wherein
the indication comprises a temporary mobile group identity (TMGI) list, and
the UE performs at least one of the following operations:
performing partial MAC reset;
suspending all SRBs, DRBs, and multicast MRBs except SRBO and a multicast MRB corresponding to a TMGI indicated by the indication; and
indicating, to a lower layer, PDCP suspension of all the DRBs and the multicast MRBs except the multicast MRB corresponding to the TMGI indicated by the indication.

5. The method according to claim 2, wherein
the indication comprises a group radio network temporary identifier (G-RNTI) or group configured scheduling radio network temporary identifier (G-CS-RNTI) list, and
the UE performs at least one of the following operations:
performing partial MAC reset;
suspending all SRBs, DRBs, and multicast MRBs except SRBO and a multicast MRB corresponding to a G-RNTI or G-CS-RNTI indicated by the indication; and
indicating, to a lower layer, PDCP suspension of all the DRBs and the multicast MRBs except the multicast MRB corresponding to the G-RNTI or G-CS-RNTI indicated by the indication.

6. The method according to claim 2, wherein
the indication comprises a bitmap, and
the UE performs at least one of the following operations:
performing partial MAC reset;
suspending all SRBs, DRBs, and multicast MRBs except SRBO and a multicast MRB corresponding to a bit having the value of 1 in the bitmap; and
indicating, to a lower layer, PDCP suspension of all the DRBs and the multicast MRBs except the multicast MRB corresponding to the bit having the value of 1 in the bitmap.

7. The method according to claim 2, wherein
the indication is used to indicate that the UE, after entering the RRC inactive state, receives an MBS session or an MRB not configured to require HARQ feedback, and
the UE performs at least one of the following operations:
performing partial MAC reset;
suspending all SRBs, DRBs, and multicast MRBs except SRBO and an MRB corresponding to the MBS multicast not configured to require HARQ feedback; and
indicating, to a lower layer, PDCP suspension of all the DRBs and the multicast MRBs except the multicast MRB corresponding to the MBS multicast not configured to require HARQ feedback.

8. The method according to claim 1, wherein
an RRC reconfiguration message is received from the base station, and the RRC reconfiguration message comprises, in a corresponding configuration field of an MRB, the indication used for indicating whether the UE receives the MRB after entering the RRC inactive state, and
in the case that at least one MRB is configured with the indication, the UE performs at least one of the following operations:
performing partial MAC reset;
suspending all SRBs, DRBs, and multicast MRBs except SRBO and the multicast MRB configured with the indication; and
indicating, to a lower layer, PDCP suspension of all the DRBs and the multicast MRBs except the multicast MRB configured with the indication.

9. The method according to claim 1, wherein
an RRC release message is received from the base station,
and the RRC release message comprises configuration information indicating an MRB of an MBS session to be received by the UE in an inactive state, and
the UE configures the corresponding MRB according to the configuration information and receives the corresponding MBS session.

10. User equipment, comprising:
a processor; and
a memory storing instructions,
wherein the instructions, when run by the processor, perform the method according to any one of claims 1 to 9.
